# EUROPEAN PATENT APPLICATION

(11) **EP 3 644 646 A1**
(43) Date of publication of application: **29.04.2020**
(21) Application number: 18821386.2
(22) Date of filing: 22.06.2018
(51) Int. Cl.: H04W 28/08

(54) **LOAD-BALANCING METHOD AND APPARATUS**

(30) Priority: 22.06.2017 CN 201710481759
(71) Applicant: ZTE Corporation, Shenzhen, Guangdong 518057 (CN)
(72) Inventor: NIU, Kang, Shenzhen, Guangdong 518057 (CN)
(74) Representative: Baudler, Ron
(86) International application number: PCT/CN2018/092382
(87) International publication number: WO 2018/233679

(57) **Abstract**

Provided are a load balancing method and apparatus. The load balancing method includes: detecting service loads of a current cell and neighboring cells according to service attributes; and selecting, when a load of a specific service exceeds a preset threshold, a target cell for balancing load according to the specific service.

## Description

### TECHNICAL FIELD

The present disclosure relates to the technical field of mobile communication systems, and specifically to a load balancing method and apparatus.

### BACKGROUND

Service layering refers to hierarchical division on similar services according to respective characteristics of service contents. Taking a Long Term Evolution (LTE) system as an example, the LTE mobile communication system can provide a mobile communication network with multiple services such as voice, data, and multimedia. In the LTE mobile communication system, voice (Voice over LTE), data, multimedia applications, etc. are all data services, but these data services have their own characteristics. An ordinary data service mainly refers to a service with low user perception requirements (for example, web browsing, instant messaging, etc.). A voice service has high real-time requirements, while a multimedia service (for example, a video service) has not only real-time requirements, but also resource requirements. Therefore, the data services of the LTE system may be divided into at least three levels: the ordinary data services, the voice service, and the multimedia service.

Various different data services have different requirements, as well as system scheduling and resource usage. Under certain system resources, existence of various data services is limited, otherwise the system resources cannot be used in a balanced and reasonable manner. This means that when a specific data service exceeds its limit set in the system, load balancing is required in an adjacent system for the specific data service.

In a related technology, each cell in a base station serves as a system for providing the system resources, and the load is balanced with a neighboring cell (of the same or different base stations) only when the overall service load is over-limit. When the services are layered more and more, such load balancing (especially the load is balanced across base stations) will not meet actual application needs.

### SUMMARY

According to an embodiment of the present disclosure, provided is a load balancing method, including: detecting service loads of a current cell and neighboring cells according to service attributes; and selecting, in response to that a load of a specific service exceeds a preset threshold, a target cell for balancing load according to the specific service.

According to an embodiment of the present disclosure, provided is a load balancing apparatus, including: a detecting module configured to detect service loads of a current cell and neighboring cells according to service attributes; and a determining and selecting module configured to select, in response to that a load of a specific service exceeds a preset threshold, a target cell for balancing load according to the specific service.

According to an embodiment of the present disclosure, provided is a load balancing device, including a memory and a processor, the memory storing a program that, when executed by the processor, causes the processor to implement the load balancing method according to the present disclosure.

According to an embodiment of the present disclosure, provided is a storage medium, storing a program that, when executed by a processor, causes the processor to implement the load balancing method according to the present disclosure.

### BRIEF DESCRIPTION OF DRAWINGS

The accompanying drawings described here are used for providing a further understanding on the present disclosure, and constitute a part of the present disclosure. The embodiments of the present disclosure and the descriptions thereof are used for interpreting the present disclosure, rather than constituting improper limitations to the present disclosure. In the drawings:
Fig. 1 is a flowchart of a load balancing method according to an embodiment of the present disclosure;
Fig. 2 is a flowchart of step S102 in the load balancing method according to an embodiment of the present disclosure;
Fig. 3 is a schematic diagram of a load balancing apparatus according to an embodiment of the present disclosure; and
Fig. 4 is an architecture diagram of a load balancing system according to an embodiment of the present disclosure.

### DETAILED DESCRIPTION

Hereinafter, the embodiments of the present disclosure will be described in detail with reference to the accompanying drawings. It should be understood that the embodiments described below are only used to illustrate and explain the present disclosure, and are not intended to limit the present disclosure.

In a related technology, each cell in a base station provides system resources, and the load is balanced with a neighboring cell (of the same or different base stations) only when the overall service load is over-limit. In a case of service layering, for example, when the overall service load of a cell is not over-limit, and a specific layered service (for example, a VoLTE voice service) is over-limit, the cell will not initiate load balancing, so the VoLTE voice service is not balanced to the neighboring cell, which seriously affects user perception.

In the embodiments of the present disclosure, services are divided into at least an ordinary service (for example, a service with low user perception requirements), a first type of service (for example, a voice service), and a second type of service (for example, a multimedia service such as a video service). However, the present disclosure is not limited thereto, and various services may be divided in different ways according to different standards and/or needs.

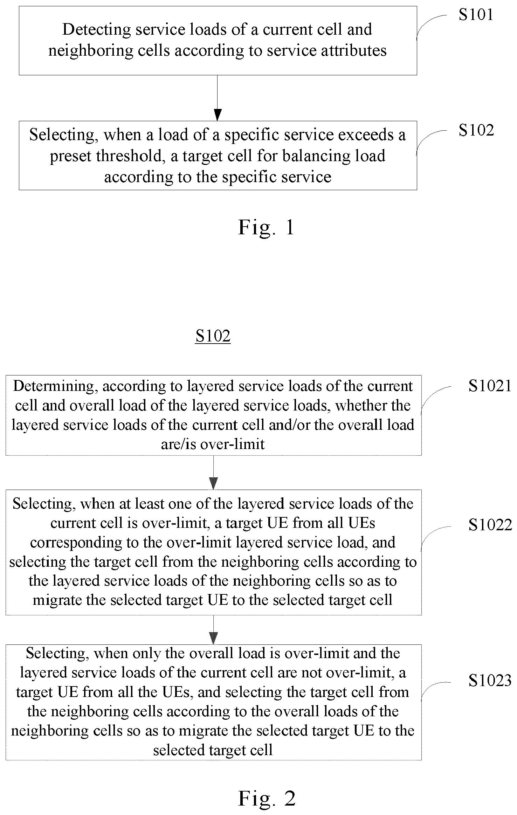

Fig. 1 is a flowchart of a load balancing method according to an embodiment of the present disclosure.

As shown in Fig. 1, the load balancing method according to the embodiment of the present disclosure may include steps S101 and S102.

In step S101, service loads of a current cell and neighboring cells are detected according to service attributes.

In step S102, when a load of a specific service exceeds a preset threshold, a target cell for balancing load is selected according to the specific service.

Step S101 may include: performing layered detection on the service loads of the current cell and the neighboring cells according to the service attributes to obtain layered service loads of the current cell and layered service loads of the neighboring cells.

Fig. 2 is a flowchart of step S102 in the load balancing method according to an embodiment of the present disclosure.

As shown in Fig. 2, step S102 may include: determining, according to the layered service loads of the current cell and overall load of the layered service loads, whether the layered service loads of the current cell and/or the overall load are/is over-limit (step S1021); selecting, in response to that at least one of the layered service loads of the current cell is over-limit, a target user equipment (UE) from all UEs corresponding to the over-limit layered service load, and selecting the target cell from the neighboring cells according to the layered service loads of the neighboring cells so as to migrate the selected target UE to the selected target cell (step S1022); and selecting, in response to that only the overall load is over-limit and the layered service loads of the current cell are not over-limit, a target UE from all the UEs, and selecting the target cell from the neighboring cells according to the overall loads of the neighboring cells so as to migrate the selected target UE to the selected target cell (step S1023).

The layered service loads may include an ordinary service load, a first type of service load, and a second type of service load, and the overall load is a sum of the ordinary service load, the first type of service load, and the second type of service load.

Step S1021 may include: if the first type of service load of the current cell exceeds a preset first load threshold, determining that the first type of service load of the current cell is over-limit; if the second type of service load of the current cell exceeds a preset second load threshold, determining that the second type of service load of the current cell is over-limit; and if the overall load of the current cell exceeds a preset overall load threshold, determining that the overall load of the current cell is over-limit.

According to the above example of the present disclosure, step S1022 may include: when the first type of service load of the current cell is over-limit or when the first type of service load and the overall load of the current cell are over-limit, selecting a UE carrying a quality of service (QoS) class identifier (QCI) 1 bearer and not carrying a QCI 2 bearer in the current cell as the target UE; and selecting, according to the first type of service loads of the neighboring cells, a cell having minimum the first type of service load as the target cell from the neighboring cells of which the first type of service load is smaller than the preset first load threshold and the overall load is smaller than the preset overall load threshold.

According to the above example of the present disclosure, step S1022 may include: when the second type of service load of the current cell is over-limit or when the second type of service load and the overall load of the current cell are over-limit, selecting a UE carrying a QCI 2 bearer in the current cell as the target UE; and selecting, according to the second type of service loads of the neighboring cells, a cell having minimum the second type of service load as the target cell from the neighboring cells of which the second type of service load is smaller than the preset second load threshold and the overall load is smaller than the preset overall load threshold.

According to the above example of the present disclosure, step S1022 may include: when both the first type of service load and the second type of service load of the current cell are over-limit, first selecting a UE carrying a QCI 1 bearer and a QCI 2 bearer at the same time and second selecting a UE carrying the QCI 1 bearer or the QCI 2 bearer in the current cell as the target UE; and selecting, according to the first type of service loads and the second type of service loads of the neighboring cells, a cell having minimum weighted sum of the first type of service load and the second type of service load as the target cell from the neighboring cells of which the first type of service load is smaller than the preset first load threshold, the second type of service load is smaller than the preset second load threshold and the overall load is smaller than the preset overall load threshold.

According to the above example of the present disclosure, step S1022 may include: when the first type of service load, the second type of service load and the overall load of the current cell are all over-limit, first selecting a UE carrying a QCI 1 bearer and a QCI 2 bearer at the same time and second selecting a UE carrying the QCI 1 bearer or the QCI 2 bearer in the current cell as the target UE; and selecting, according to the first type of service loads and the second type of service loads of the neighboring cells, a cell having minimum weighted sum of the first type of service load, the second type of service load and the overall load as the target cell from the neighboring cells of which the first type of service load is smaller than the preset first load threshold, the second type of service load is smaller than the preset second load threshold and the overall load is smaller than the preset overall load threshold.

It should be recognized that "first selecting a UE carrying a QCI 1 bearer and a QCI 2 bearer at the same time and second selecting a UE carrying the QCI 1 bearer or the QCI 2 bearer in the current cell as the target UE" indicates that, in the current cell, first selecting a UE (or UEs) carrying the QCI 1 bearer and the QCI 2 bearer at the same time and migrating the selected UE(s) to the target cell, and then selecting, when the problem of over-limit loads of layered services in the current cell is not solved thoroughly after the selected UE(s) is(are) migrated, a UE carrying the QCI 1 bearer or the QCI 2 bearer in the current cell as the target UE so as to migrate the target UE to a neighboring cell. It should be recognized that if the problem of over-limit loads of layered services in the current cell is solved after the UE(s) carrying the QCI 1 bearer and the QCI 2 bearer at the same time is(are) migrated, there is no need to select the UE carrying the QCI 1 bearer or the QCI 2 bearer.

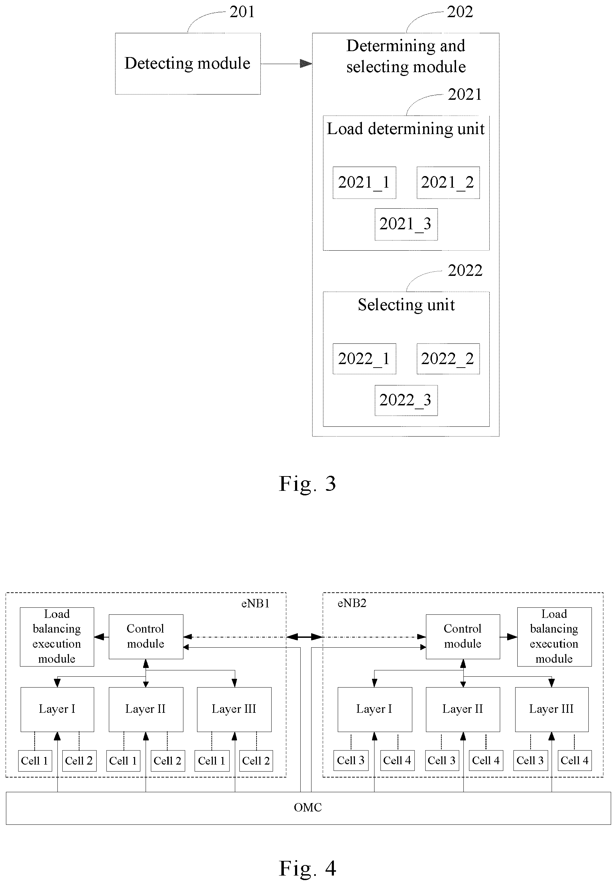

Fig. 3 is a schematic diagram of a load balancing apparatus according to an embodiment of the present disclosure.

As shown in Fig. 3, the load balancing apparatus according to the embodiment of the present disclosure includes a detecting module 201 and a determining and selecting module 202. The detecting module 201 is configured to detect service loads of a current cell and neighboring cells according to service attributes. The determining and selecting module 202 is configured to select, in response to that a load of a specific service exceeds a preset threshold, a target cell for balancing load according to the specific service.

The detecting module 201 may be configured to perform layered detection on the service loads of the current cell and the neighboring cells according to the service attributes to obtain layered service loads of the current cell and layered service loads of the neighboring cells.

The determining and selecting module 202 may include a load determining unit 2021 and a selecting unit 2022. The load determining unit 2021 is configured to determine, according to the layered service loads of the current cell and overall load of the layered service loads, whether the layered service loads of the current cell and/or the overall load are/is over-limit. The selecting unit 2022 is configured to select, in response to that at least one of the layered service loads of the current cell is over-limit, a target UE from all UEs corresponding to the over-limit layered service load, and select the target cell from the neighboring cells according to the layered service loads of the neighboring cells so as to migrate the selected target UE to the selected target cell; and select, in response to that only the overall load is over-limit and the layered service loads of the current cell are not over-limit, a target UE from all the UEs, and select the target cell from the neighboring cells according to the overall loads of the neighboring cells so as to migrate the selected target UE to the selected target cell.

As described above, the layered service loads may include an ordinary service load, a first type of service load, and a second type of service load, and the overall load is a sum of the ordinary service load, the first type of service load, and the second type of service load.

The load determining unit 2021 may include a first-type load determining subunit 2021_1, a second-type load determining subunit 2021_2, and an overall load determining subunit 2021_3. When the first type of service load of the current cell exceeds a preset first load threshold, the first-type load determining subunit 2021_1 determines that the first type of service load of the current cell is over-limit. When the second type of service load of the current cell exceeds a preset second load threshold, the second-type load determining subunit 2021_2 determines that the second type of service load of the current cell is over-limit. When the overall load of the current cell exceeds a preset overall load threshold, the overall load determining subunit 2021_3 determines that the overall load of the current cell is over-limit.

The selecting unit 2022 may include a first selecting subunit 2022_1, a second selecting subunit 2022_2, and a third selecting subunit 2022_3.

When the first type of service load of the current cell is over-limit or when the first type of service load and the overall load of the current cell are over-limit, the first selecting subunit 2022_1 selects a UE carrying a QCI 1 bearer and not carrying a QCI 2 bearer in the current cell as the target UE, and selects, according to the first type of service loads of the neighboring cells, a cell having minimum the first type of service load as the target cell from the neighboring cells of which the first type of service load is smaller than the preset first load threshold and the overall load is smaller than the preset overall load threshold.

When the second type of service load of the current cell is over-limit or when the second type of service load and the overall load of the current cell are over-limit, the second selecting subunit 2022_2 selects a UE carrying a QCI 2 bearer in the current cell as the target UE, and selects, according to the second type of service loads of the neighboring cells, a cell having minimum the second type of service load as the target cell from the neighboring cells of which the second type of service load is smaller than the preset second load threshold and the overall load is smaller than the preset overall load threshold.

When both the first type of service load and the second type of service load of the current cell are over-limit, the third selecting subunit 2022_3 first selects a UE carrying a QCI 1 bearer and a QCI 2 bearer at the same time and second selects a UE carrying the QCI 1 bearer or the QCI 2 bearer in the current cell as the target UE, and selects, according to the first type of service loads and the second type of service loads of the neighboring cells, a cell having minimum weighted sum of the first type of service load and the second type of service load as the target cell from the neighboring cells of which the first type of service load is smaller than the preset first load threshold, the second type of service load is smaller than the preset second load threshold and the overall load is smaller than the preset overall load threshold.

When the first type of service load, the second type of service load and the overall load of the current cell are all over-limit, the third selecting subunit 2022 3 first selects a UE carrying a QCI 1 bearer and a QCI 2 bearer at the same time and second selects a UE carrying the QCI 1 bearer or the QCI 2 bearer in the current cell as the target UE, and selects, according to the first type of service loads and the second type of service loads of the neighboring cells, a cell having minimum weighted sum of the first type of service load, the second type of service load and the overall load as the target cell from the neighboring cells of which the first type of service load is smaller than the preset first load threshold, the second type of service load is smaller than the preset second load threshold and the overall load is smaller than the preset overall load threshold.

As described above, "the third selecting subunit 2022_3 first selects a UE carrying a QCI 1 bearer and a QCI 2 bearer at the same time and second selects a UE carrying the QCI 1 bearer or the QCI 2 bearer in the current cell as the target UE" indicates that, in the current cell, the third selecting subunit 2022_3 first selects a UE (or UEs) carrying the QCI 1 bearer and the QCI 2 bearer at the same time and migrates the selected UE(s) to the target cell, and when the problem of over-limit loads of layered services in the current cell is not solved thoroughly after the selected UE(s) is(are) migrated, the third selecting subunit 2022_3 then selects a UE carrying the QCI 1 bearer or the QCI 2 bearer in the current cell as the target UE so as to migrate the target UE to a neighboring cell. It should be recognized that if the problem of over-limit loads of layered services in the current cell is solved after the UE(s) carrying the QCI 1 bearer and the QCI 2 bearer at the same time is(are) migrated, there is no need for the third selecting subunit 2022_3 to select the UE carrying the QCI 1 bearer or the QCI 2 bearer.

The load balancing method according to the embodiment of the present disclosure may include the following steps 1 to 6.

In step 1, cell loads are classified and identified according to attributes (that is, services are layered), and a load threshold of each layered services and an overall load threshold are set. The overall load may be a sum of loads of the layered services.

For example, layering may be performed according to resource occupation, system capacity, etc. VoLTE voice service or VoLTE video service containable by a system are limited and the amount of containable services varies. Various services cannot occupy all system resources. For example, when a cell is capable of containing data service of 1200 UEs, the cell may only support VoLTE voice service of 100 users at most and VoLTE video service (or multimedia application) of 50 users at most.

Users of data service may be divided into ordinary data users, VoLTE voice users (carrying QCI 1 bearers but not QCI 2 bearers), and VoLTE video users (carrying QCI 2 bearers). However, the present disclosure is not limited thereto, and the users of various services may be divided in different ways according to different standards and/or needs.

In step 2, load information of each layer after layering of a cell is added to a message transmitted between base stations.

In step 3, a base station periodically collects layered loads and overall load of each cell, and exchanges information about the load with surrounding base stations, and maintains the information about the load locally.

In step 4, whether the overall load and/or layered loads of each cell exceeds a corresponding threshold is detected.

If the load of a VoLTE voice user exceeds the threshold, step 5 is performed and VoLTE voice user load balancing is enabled; if the load of a VoLTE video user exceeds the threshold, step 5 is performed and VoLTE video user load balancing is enabled; if the overall load of the cell exceeds the threshold, step 5 is performed and overall load balancing of the cell is enabled.

In step 5, various load balancing methods are provided through a UE selection strategy and a target cell selection strategy, including enabling single load balancing, enabling two kinds of load balancing, and enabling three kinds of load balancing.

Enabling single load balancing may include enabling only VoLTE voice user load balancing, enabling only VoLTE video user load balancing, and enabling only overall load balancing.

Enabling only VoLTE voice user load balancing may include: selecting a UE carrying the QCI 1 bearer and not carrying the QCI 2 bearer as the target UE; and selecting a cell of which the VoLTE voice user load is smaller than the first load threshold and the overall user load is smaller than the overall load threshold as the target cell. If multiple cells satisfy the condition, the VoLTE voice user loads are sequenced from low to high, and the cell having minimum VoLTE voice user load is selected.

Enabling only VoLTE video user load balancing may include: selecting a UE carrying the QCI 2 bearer as the target UE; and selecting a cell of which the VoLTE video user load is smaller than the second load threshold and the overall user load is smaller than the overall load threshold as the target cell. If multiple cells satisfy the condition, the VoLTE video user loads are sequenced from low to high, and the cell having minimum VoLTE video user load is selected.

Enabling only overall load balancing may select a user according to the load balancing strategy in the related technology.

Enabling two kinds of load balancing may include enabling VoLTE voice user load balancing and overall load balancing, enabling VoLTE video user load balancing and overall load balancing, and enabling VoLTE voice user load balancing and VoLTE video user load balancing.

Enabling VoLTE voice user load balancing and overall load balancing may include: selecting a UE carrying the QCI 1 bearer and not carrying the QCI 2 bearer as the target UE; and selecting a cell of which the VoLTE voice user load is smaller than the first load threshold and the overall user load is smaller than the overall load threshold as the target cell. If multiple cells satisfy the condition, the VoLTE voice user loads are sequenced from low to high, and the cell having minimum VoLTE voice user load is selected.

Enabling VoLTE video user load balancing and overall load balancing may include: selecting a UE carrying the QCI 2 bearer as the target UE; and selecting a cell of which the VoLTE video user load is smaller than the second load threshold and the overall user load is smaller than the overall load threshold as the target cell. If multiple cells satisfy the condition, the VoLTE video user loads are sequenced from low to high, and the cell having minimum VoLTE video user load is selected.

Enabling VoLTE voice user load balancing and VoLTE video user load balancing may include: first selecting a UE carrying the QCI 1 and the QCI 2 bearers at the same time as the target UE, and second selecting a UE carrying the QCI 1 or the QCI 2 as the target UE; and selecting a cell of which the VoLTE voice user load is smaller than the first load threshold, the VoLTE video user load is smaller than the second load threshold and the overall user load is smaller than the overall load threshold as the target cell. If multiple cells satisfy the condition, weighted sums of the VoLTE voice user loads and the VoLTE video user loads are calculated and sequenced from low to high, and the cell having minimum weighted sum is selected.

Enabling three kinds of load balancing may include enabling VoLTE voice user load balancing, VoLTE video user load balancing, and overall load balancing. A UE carrying the QCI 1 and the QCI 2 bearers is first selected as the target UE, and a UE carrying the QCI 1 or the QCI 2 is then selected as the target UE. A cell of which the VoLTE voice user load is smaller than the first load threshold, the VoLTE video user load is smaller than the second load threshold and the overall load is smaller than the overall load threshold is selected as the target cell. If multiple cells satisfy the condition, weighted sums of the VoLTE voice user loads, the VoLTE video user loads and the overall loads are calculated and sequenced from low to high, and the cell having minimum weighted sum is selected.

In step 6, load balancing is performed for a specific service layer, that is, the UE is migrated by means of handover or the like.

Fig. 4 is an architecture diagram of a load balancing system according to an embodiment of the present disclosure.

As shown in Fig. 4, each base station (eNB1 or eNB2) may include a control module, a layering module, various cells, and a load balancing execution module. An Operation Maintenance Center (OMC) may configure or modify thresholds of layered loads and overall load of each cell of each base station.

The control module may perform the following operations: receiving a cell update notification for layers of a current base station; summarizing messages and notifying surrounding base stations; receiving cell update messages for layers of the surrounding base stations; notifying corresponding layering modules and maintaining the overall load of each cell; monitoring whether the overall load of each cell is over-limit, and enabling a load balancing decision when it is over-limit; and receiving load over-limit information reported by each layering module, and making a load balancing decision.

The layering module (shown as layer I, layer II, and layer III in Fig. 4) may perform the following operations: acquiring corresponding layer information from each cell of the current base station and maintaining the layer information; notifying the control module when the cell information of a layer is updated; receiving and maintaining layer information of each cell of other base stations sent by the control module; acquiring and saving corresponding load thresholds of each cell; monitoring whether a corresponding cell is over-limit; and reporting to the control module if it is over-limit.

Each of the cells may summarize the layer information of the cell and periodically report the layer information to a corresponding layering module.

The load balancing execution module may execute the load balancing method according to the present disclosure.

Through the description of the above embodiments, those skilled in the art could clearly understand that the methods according to the above embodiments may be implemented by means of a combination of software and common hardware platform. Of course, the method may also be implemented by hardware. Based on such an understanding, the technical solution of the present disclosure may be implemented in the form of a software product. The computer software product is stored in a storage medium (e.g., an ROM/RAM, a magnetic disk, an optical disk), and includes a plurality of instructions enabling a terminal device (which may be a mobile phone, a computer, a server, or a network device, etc.) to execute the load balancing method according to the embodiments of the present disclosure.

The storage medium may include (but is not limited to): various media capable of storing program codes, such as a Read Only Memory (ROM), a Random Access Memory (RAM), a mobile hard disk, a magnetic disk, or an optical disk.

In the embodiments of the present disclosure, the load balancing method described in the above embodiments may be executed by a processor.

Those skilled in the art should understand that the various units or steps of the present disclosure may be implemented by a general-purpose computing device, where the computing device may be centralized on a single computing device or distributed on a network composed of a plurality of computing devices. According to the embodiments of the present disclosure, the various units or steps of the present disclosure may also be implemented by program codes executable by a computing device, where the executable program codes may be stored in a storage device and executed by the computing device. In some cases, the methods described in the embodiments of the present disclosure may be performed in steps other than those shown or described herein. The present disclosure is not limited to any specific combination of hardware and software.

According to the solutions provided by the embodiments of the present disclosure, cell loads are layered according to different services, which can adapt to the service load balance of different service types more flexibly, achieve uniform distribution of different types of services between cells, relieve the scheduling pressure of a serving cell system, and improve the experience of data users.

Although the present disclosure is described in detail above, the present disclosure is not limited thereto, and those skilled in the art may make various modifications according to the principle of the present disclosure. Therefore, any modification made according to the principle of the present disclosure should be understood to fall within the protection scope of the present disclosure.

## Claims

1. A load balancing method, comprising:
detecting service loads of a current cell and neighboring cells according to service attributes; and
selecting, in response to that a load of a specific service exceeds a preset threshold, a target cell for balancing load according to the specific service.

2. The load balancing method according to claim 1, wherein the step of detecting the service loads of the current cell and the neighboring cells according to the service attributes comprises:
performing layered detection on the service loads of the current cell and the neighboring cells according to the service attributes to obtain layered service loads of the current cell and layered service loads of the neighboring cells.

3. The load balancing method according to claim 2, wherein the step of selecting, in response to that the load of the specific service exceeds the preset threshold, the target cell for balancing load according to the specific service comprises:
determining, according to the layered service loads of the current cell and overall load of the layered service loads, whether the layered service loads of the current cell and/or the overall load are/is over-limit;
selecting, in response to that at least one of the layered service loads of the current cell is over-limit, a target user equipment (UE) from all UEs corresponding to the over-limit layered service load, and selecting the target cell from the neighboring cells according to the layered service loads of the neighboring cells so as to migrate the selected target UE to the selected target cell; and
selecting, in response to that only the overall load is over-limit and the layered service loads of the current cell are not over-limit, a target UE from all the UEs, and selecting the target cell from the neighboring cells according to the overall loads of the neighboring cells so as to migrate the selected target UE to the selected target cell.

4. The load balancing method according to claim 3, wherein the layered service loads comprise an ordinary service load, a first type of service load, and a second type of service load, and the overall load is a sum of the ordinary service load, the first type of service load, and the second type of service load,
wherein the step of determining, according to the layered service loads of the current cell and the overall load of the layered service loads, whether the layered service loads of the current cell and/or the overall load are/is over-limit comprises:
in response to that the first type of service load of the current cell exceeds a preset first load threshold, determining that the first type of service load of the current cell is over-limit;
in response to that the second type of service load of the current cell exceeds a preset second load threshold, determining that the second type of service load of the current cell is over-limit; and
in response to that the overall load of the current cell exceeds a preset overall load threshold, determining that the overall load of the current cell is over-limit.

5. The load balancing method according to claim 4, wherein the step of selecting, in response to that at least one of the layered service loads of the current cell is over-limit, the target UE from all UEs corresponding to the over-limit layered service load, and selecting the target cell from the neighboring cells according to the layered service loads of the neighboring cells comprises:
in response to that the first type of service load of the current cell is over-limit or the first type of service load and the overall load of the current cell are over-limit, selecting a UE carrying a Quality of Service (QoS) Class Identifier (QCI) 1 bearer and not carrying a QCI 2 bearer in the current cell as the target UE; and
selecting, according to the first type of service loads of the neighboring cells, a cell having minimum the first type of service load as the target cell from the neighboring cells of which the first type of service load is smaller than the preset first load threshold and the overall load is smaller than the preset overall load threshold.

6. The load balancing method according to claim 4, wherein the step of selecting, in response to that at least one of the layered service loads of the current cell is over-limit, the target UE from all UEs corresponding to the over-limit layered service load, and selecting the target cell from the neighboring cells according to the layered service loads of the neighboring cells comprises:
in response to that the second type of service load of the current cell is over-limit or the second type of service load and the overall load of the current cell are over-limit, selecting a UE carrying a QCI 2 bearer in the current cell as the target UE; and
selecting, according to the second type of service loads of the neighboring cells, a cell having minimum the second type of service load as the target cell from the neighboring cells of which the second type of service load is smaller than the preset second load threshold and the overall load is smaller than the preset overall load threshold.

7. The load balancing method according to claim 4, wherein the step of selecting, in response to that at least one of the layered service loads of the current cell is over-limit, the target UE from all UEs corresponding to the over-limit layered service load, and selecting the target cell from the neighboring cells according to the layered service loads of the neighboring cells comprises:
in response to that both the first type of service load and the second type of service load of the current cell are over-limit, first selecting a UE carrying a QCI 1 bearer and a QCI 2 bearer at the same time and second selecting a UE carrying the QCI 1 bearer or the QCI 2 bearer in the current cell as the target UE; and
selecting, according to the first type of service loads and the second type of service loads of the neighboring cells, a cell having minimum weighted sum of the first type of service load and the second type of service load as the target cell from the neighboring cells of which the first type of service load is smaller than the preset first load threshold, the second type of service load is smaller than the preset second load threshold and the overall load is smaller than the preset overall load threshold.

8. The load balancing method according to claim 4, wherein the step of selecting, in response to that at least one of the layered service loads of the current cell is over-limit, the target UE from all UEs corresponding to the over-limit layered service load, and selecting the target cell from the neighboring cells according to the layered service loads of the neighboring cells comprises:
in response to that the first type of service load, the second type of service load and the overall load of the current cell are all over-limit, first selecting a UE carrying a QCI 1 bearer and a QCI 2 bearer at the same time and second selecting a UE carrying the QCI 1 bearer or the QCI 2 bearer in the current cell as the target UE; and
selecting, according to the first type of service loads and the second type of service loads of the neighboring cells, a cell having minimum weighted sum of the first type of service load, the second type of service load and the overall load as the target cell from the neighboring cells of which the first type of service load is smaller than the preset first load threshold, the second type of service load is smaller than the preset second load threshold and the overall load is smaller than the preset overall load threshold.

9. The load balancing method according to claim 4, wherein the ordinary service load is user data load, the first type of service load is Voice over Long Term Evolution (VoLTE) audio service load, and the second type of service load is VoLTE video service load.

10. A load balancing apparatus, comprising:
a detecting module configured to detect service loads of a current cell and neighboring cells according to service attributes; and
a determining and selecting module configured to select, in response to that a load of a specific service exceeds a preset threshold, a target cell for balancing load according to the specific service.

11. The load balancing apparatus according to claim 10, wherein the detecting module is configured to:
perform layered detection on the service loads of the current cell and the neighboring cells according to the service attributes to obtain layered service loads of the current cell and layered service loads of the neighboring cells.

12. The load balancing apparatus according to claim 11, wherein the determining and selecting module comprises a load determining unit and a selecting unit,
the load determining unit is configured to:
determine, according to the layered service loads of the current cell and overall load of the layered service loads, whether the layered service loads of the current cell and/or the overall load are/is over-limit; and
the selecting unit is configured to:
select, in response to that at least one of the layered service loads of the current cell is over-limit, a target user equipment (UE) from all UEs corresponding to the over-limit layered service load, and select the target cell from the neighboring cells according to the layered service loads of the neighboring cells so as to migrate the selected target UE to the selected target cell; and
select, in response to that only the overall load is over-limit and the layered service loads of the current cell are not over-limit, a target UE from all the UEs, and select the target cell from the neighboring cells according to the overall loads of the neighboring cells so as to migrate the selected target UE to the selected target cell.

13. The load balancing apparatus according to claim 12, wherein the layered service loads comprise an ordinary service load, a first type of service load, and a second type of service load, and the overall load is a sum of the ordinary service load, the first type of service load, and the second type of service load,
wherein the load determining unit comprises a first-type load determining subunit, a second-type load determining subunit, and an overall load determining subunit,
in response to that the first type of service load of the current cell exceeds a preset first load threshold, the first-type load determining subunit determines that the first type of service load of the current cell is over-limit,
in response to that the second type of service load of the current cell exceeds a preset second load threshold, the second-type load determining subunit determines that the second type of service load of the current cell is over-limit, and
in response to that the overall load of the current cell exceeds a preset overall load threshold, the overall load determining subunit determines that the overall load of the current cell is over-limit.

14. The load balancing apparatus according to claim 13, wherein the selecting unit comprises a first selecting subunit,
in response to that the first type of service load of the current cell is over-limit or the first type of service load and the overall load of the current cell are over-limit, the first selecting subunit selects a UE carrying a Quality of Service (QoS) Class Identifier (QCI) 1 bearer and not carrying a QCI 2 bearer in the current cell as the target UE, and selects, according to the first type of service loads of the neighboring cells, a cell having minimum the first type of service load as the target cell from the neighboring cells of which the first type of service load is smaller than the preset first load threshold and the overall load is smaller than the preset overall load threshold.

15. The load balancing apparatus according to claim 13, wherein the selecting unit comprises a second selecting subunit,
in response to that the second type of service load of the current cell is over-limit or the second type of service load and the overall load of the current cell are over-limit, the second selecting subunit selects a UE carrying a QCI 2 bearer in the current cell as the target UE, and selects, according to the second type of service loads of the neighboring cells, a cell having minimum the second type of service load as the target cell from the neighboring cells of which the second type of service load is smaller than the preset second load threshold and the overall load is smaller than the preset overall load threshold.

16. The load balancing apparatus according to claim 13, wherein the selecting unit comprises a third selecting subunit,
in response to that both the first type of service load and the second type of service load of the current cell are over-limit, the third selecting subunit first selects a UE carrying a QCI 1 bearer and a QCI 2 bearer at the same time and second selects a UE carrying the QCI 1 bearer or the QCI 2 bearer in the current cell as the target UE, and selects, according to the first type of service loads and the second type of service loads of the neighboring cells, a cell having minimum weighted sum of the first type of service load and the second type of service load as the target cell from the neighboring cells of which the first type of service load is smaller than the preset first load threshold, the second type of service load is smaller than the preset second load threshold and the overall load is smaller than the preset overall load threshold.

17. The load balancing apparatus according to claim 13, wherein the selecting unit comprises a third selecting subunit,
in response to that the first type of service load, the second type of service load and the overall load of the current cell are all over-limit, the third selecting subunit first selects a UE carrying a QCI 1 bearer and a QCI 2 bearer at the same time and second selects a UE carrying the QCI 1 bearer or the QCI 2 bearer in the current cell as the target UE, and selects, according to the first type of service loads and the second type of service loads of the neighboring cells, a cell having minimum weighted sum of the first type of service load, the second type of service load and the overall load as the target cell from the neighboring cells of which the first type of service load is smaller than the preset first load threshold, the second type of service load is smaller than the preset second load threshold and the overall load is smaller than the preset overall load threshold.

18. The load balancing apparatus according to claim 13, wherein the ordinary service load is user data load, the first type of service load is Voice over Long Term Evolution (VoLTE) audio service load, and the second type of service load is VoLTE video service load.

19. A load balancing device, comprising a memory and a processor, the memory storing a program that, when executed by the processor, causes the processor to implement the load balancing method according to any one of claims 1 to 9.

20. A storage medium, storing a program that, when executed by a processor, causes the processor to implement the load balancing method according to any one of claims 1 to 9.
